# EUROPÄISCHE PATENTSCHRIFT

(11) **EP 0 529 440 B1**
(45) Veröffentlichungstag und Bekanntmachung des Hinweises auf die Patenterteilung: **19.06.1996**
(21) Anmeldenummer: 92113904.4
(22) Anmeldetag: 14.08.1992
(51) Int. Cl.: G01B 7/00, G01D 5/22, B65H 23/02

(54) **Vorrichtung zur induktiven Messung der Lage eines Metallbandes**
Apparatus for inductively measuring the position of a metal sheet
Appareil de mesure de la position d'une tôle métallique au moyen inductif

(30) Priorität: 14.08.1991 DE 4126921
(43) Veröffentlichungstag der Anmeldung: 03.03.1993
(73) Patentinhaber: ELEKTRO-MECHANIK GMBH, D-57482 Wenden (DE)
(72) Erfinder: Wagner, Harald, Dipl.-Ing., W-5910 Kreuztal 1 (DE)
(74) Vertreter: Klingseisen, Franz, Dipl.-Ing.

(56) Entgegenhaltungen:
- EP-A- 0 098 238
- EP-A- 0 179 720
- WO-A-92/01956
- DE-A- 1 964 936
- DE-A- 3 244 420
- FR-A- 2 233 596
- GB-A- 861 153
- GB-A- 1 183 974

## Beschreibung

Die Erfindung betrifft eine Vorrichtung zur induktiven Messung der Lage eines Metallbandes entsprechend dem Oberbegriff des Anspruchs 1.

Eine Vorrichtung dieser Art ist aus DE-A-1 964 936 bekannt, wobei beiderseits der Längsachse eines Bandes im gleichen Abstand von diesem jeweils eine mit einem lamelliertem Eisenkern versehene, wechselstromgespeiste Senderspule und eine im gleicherweise ausgebildete Empfängerspule auf Abstand voneinander angeordnet sind, so daß das in dem Raum zwischen den beiden Sender- und Empfängerspulen sich bewegende Band in seiner Mittenlage gleichen Abstand von den Spulen hat.

Aus DE-A-3 244 420 ist ein Abstandssensor für ein Magnetschwebefahrzeug bekannt, bei dem eine in Form eines langgestreckten, flachen Kastens gewickelte Sendespule mit ihrer Spulenachse schräg zur Fahrtrichtung des Magnetschwebefahrzeugs ausgerichtet ist und etwa jeweils eine Nut und einen Zahn eines Langstators überdeckt. In der dem Langstator zugewandten und der diesem abgewandten Ebene der Sendespule ist eine diese etwa in Form einer deformierten acht umgebende Empfangsspule angeordnet, wobei die beiden Empfangsspulen so geschaltet sind, daß sich deren Empfangsspannungen subtrahieren Die Sendespule wird mit einer Wechselspannung betrieben, deren Frequenz etwa 100 kHz beträgt.

Die induktive Messung der Lage eines Metallbandes wird trotz der Vorteile einer großen Unempfindlichkeit gegenüber Material-ablagerungen, wie Zunder, auf dem Band und einem hohen Maß an Wartungsfreiheit nur in begrenztem Umfang eingesetzt, weil sich dünne, nicht-magnetische Metallbänder bei dem erforderlichen großen Meßbereich mit den bekannten Meßanordnungen nicht erfassen lassen.

Der Erfindung liegt die Aufgabe zugrunde, eine Vorrichtung der eingangs angegebenen Art so auszubilden, daß der Einsatzbereich der induktiven Bandlagemessung vergrößert wird und insbesondere auch an dünnen, nicht-magnetischen Metallbändern zuverlässige Meßwerte erhalten werden.

Diese Aufgabe wird erfindungsgemäß durch die Merkmale im Kennzeichen des Anspruchs 1 gelöst.

Durch die hohe Betriebsfrequenz von z.B. ca. 40 kHz wird ein starker Meßeffekt erreicht, durch den auch dünne, nicht-magnetische Metallbänder sicher erfaßt werden können. Auch wird durch die hohe Betriebsfrequenz eine Verbesserung des Meßeffekts beim Messen der Lage von Metallbändern hoher Temperatur erreicht, so daß die induktive Lagemessung auch im Bereich von Glühöfen und dgl. eingesetzt werden kann.

Durch Vorsehen nicht-magnetischer Spulenkerne wird eine geringe Kapazität der Spulen erreicht, so daß die Spulen eine hohe Eigen-Resonanzfrequenz haben und mit hoher Betriebsfrequenz betrieben werden können.

Weitere vorteilhafte Ausgestaltungen der Erfindung sind in den weiteren Ansprüchen angegeben

Beispielsweise Ausführungsformen der Erfindung werden nachfolgend anhand der Zeichnung näher erläutert. Es zeigen
Fig. 1 eine schematische Darstellung der Meßanordnung in einer Draufsicht in Fig. la und einer Schnittansicht in Fig. 1b längs der Linie A-A in Fig. 1 a,
Fig. 2 die Art der Wicklung der Spulen, wobei
Fig. 2a eine Draufsicht auf eine Spule,
Fig. 2b eine Schnittansicht durch die Spule längs der Linie A-A in Fig. 2a, und
Fig. 2c eine Seitenansicht der Spule wiedergibt,
Fig. 3 einen Längsschnitt durch ein eine Spule umgebendes Gehäuse,
Fig. 4 eine schematische Querschnittsansicht des Gehäuses für eine Spule,
Fig. 5a und 5b in einer Querschnittsansicht entsprechend Fig. 4 andere Ausgestaltungen des eine Spule umgebenden Aufbaus,
Fig. 6 eine perspektivische Darstellung der Meßanordnung mit einem Referenzsensor,
Fig. 7 schematisch eine abgewandelte Anordnung von Primär-, Sekundär-und Referenzspulen,
Fig. 8 ein Blockschaltbild der Meßanordnung,
Fig. 9 ein Schaltbild für die Sicherheitsschaltung, und
Fig. 10 ein Blockschaltbild mit Referenzsensor.

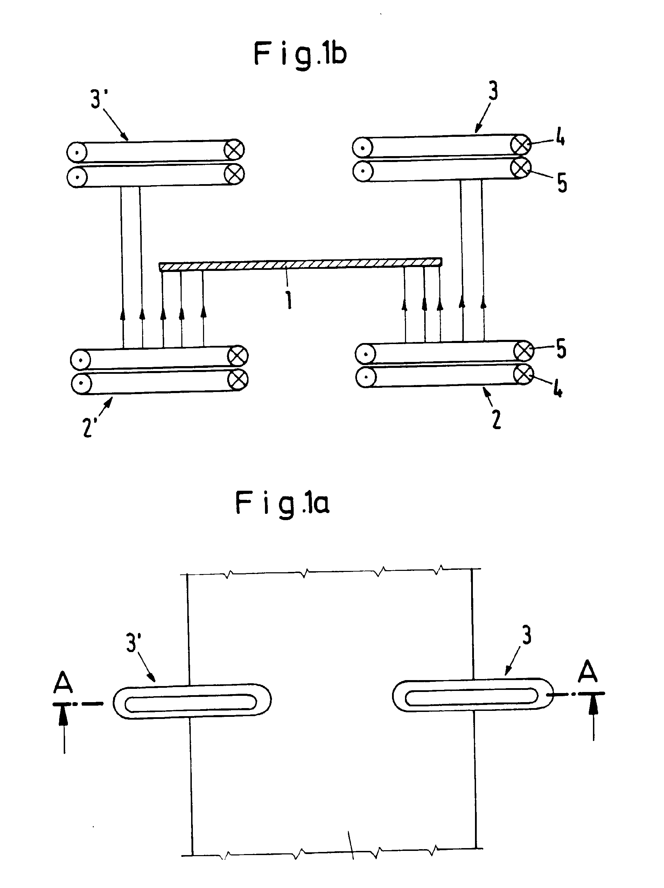

Die in Fig. 1 schematisch wiedergegebene Anordnung ist für die Messung der Mittenlage eines Metallbandes 1 vorgesehen und sie weist an den beiden Bandkanten jeweils eine Primärspule 2,2', die bei diesem Ausführungsbeispiel unter der Bandkante liegen, und eine über der Bandkante, der Primärspule nach Art eines kernlosen Transformators gegenüberliegend angeordnete Sekundärspule 3,3' auf. Die Spulen sind etwa in Form eines langgestreckten Rechtecks gewickelt und mit ihrer Längsachse quer zur Bandkante in einem Winkel von 90° symmetrisch zur Bandmitte angeordnet. Die Primärspulen 2,2' werden mit einer hohen Betriebsfrequenz von wenigstens 10 kHz, beispielsweise um 40 kHz betrieben. Die Primär- und/oder Sekundärspulen können zur Verstärkung des Meßeffekts in Schwingkreisen in der Nähe ihrer Resonanzfrequenz betrieben werden. Die Betriebsfrequenz kann bspw. auch bis 100 kHz betragen.

Fig. 1 zeigt schematisch die Änderung des Kopplungseffektes zwischen Primär- und Sekundärspule durch die dazwischenliegende Bandkante, wobei schematisch Feldlinien angedeutet sind, die teilweise durch das magnetisch oder elektrisch leitfähige Band abgeschirmt werden. Die hierdurch hervorgerufene Kopplungsänderung zwischen Primär- und Sekundärspule wird als Maß für die Bandlage ausgewertet. Tatsächlich ergibt sich bei hoher Betriebsfrequenz eine kugelförmige Abstrahlung an jedem Punkt der langgestreckten Primärspulen 2,2'. Die kugelförmige Abstrahlung ergibt im wesentlichen über die Länge der Spulen ein homogenes elektromagnetisches Feld, das nur an den beiden Spulenenden nicht homogen wird. Um über den Meßbereich ein homgenes Feld zu erhalten, wird deshalb die Länge der Spulen größer ausgelegt als die Länge des Meßbereichs.

Die Eigen-Resonanzfrequenz einer Spule wird neben der Induktivität im wesentlichen von der Kapazität bestimmt, wobei geringere Kapazität zu höherer Eigen-Resonanzfrequenz führt. Um einen Betrieb bei Resonanz zu ermöglichen, soll deshalb die Eigen-Resonanzfrequenz den Wert der Betriebsfrequenz (z. B. 40 kHz) oder einen höheren Wert haben.

Um den Spulen eine hohe Eigen-Resonanzfrequenz zu geben, weisen diese zur Verringerung der Induktivität nicht-magnetische bzw. im wesentlichen nicht-magnetische Spulenkerne auf und sie sind in besonderer Weise gewickelt, damit eine geringe Kapazität der Spulen erzielt wird.

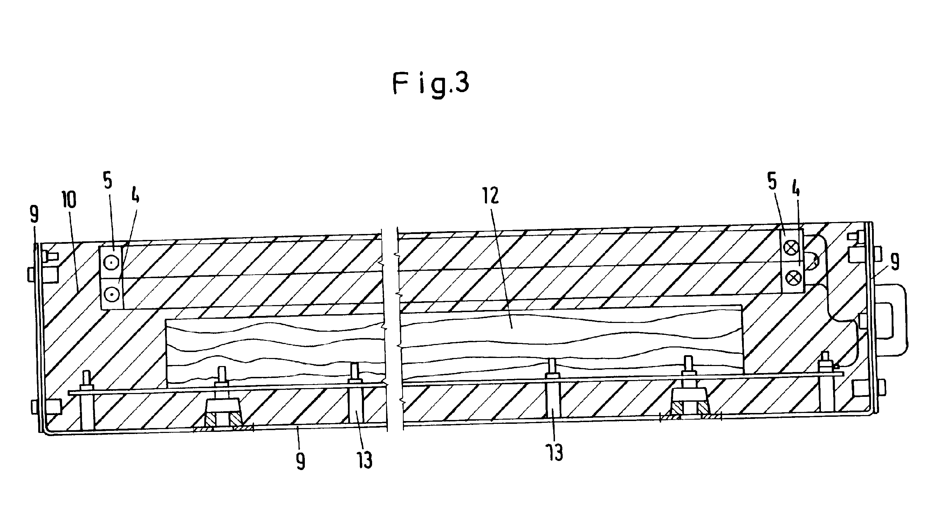

Elektromagnetische Wellen, die von außen in das Meßsystem eindringen, verändern bei herkömmlichen induktiven Bandlagemeßvorrichtungen die Beziehung zwischen Feldstärke H und der Induktion B. Durch den Einsatz nicht-magnetischer Spulenkerne wird ein lineares Verhältnis zwischen Feldstärke H und Induktion B erreicht, wodurch die von außen in das Meßsystem eindringenden elektromagnetischen Wellen ohne Wirkung bleiben, wenn die in den Sekundärspulen induzierte Wechselamplituden ausgewertet werden. Bei dem in Fig. 3 dargestellten Ausführungsbeispiel bestehen die Spulenkerne aus Epoxydharz, das als Vergußmasse für die Spulen verwendet wird.

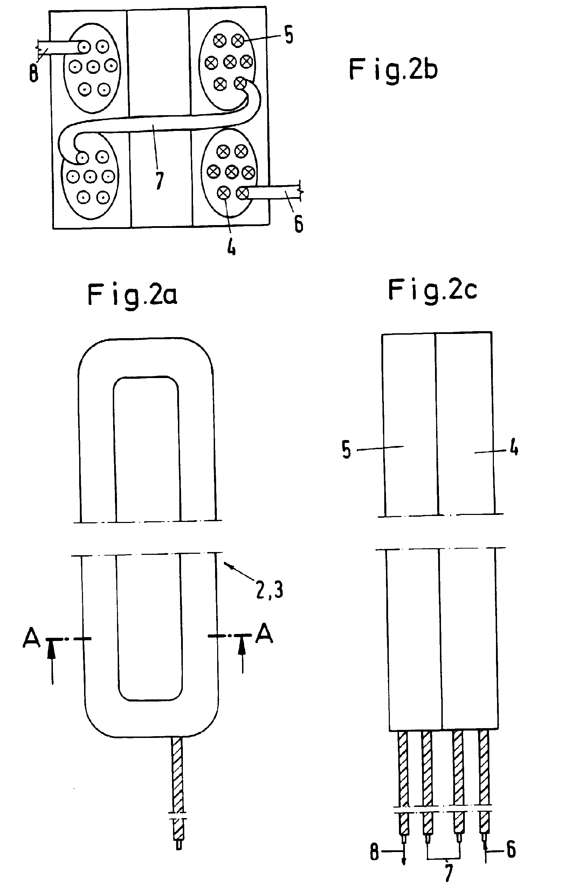

Die Wicklung einer Spule 2 oder 3 ist beim dem dargestellten Ausführungsbeispiel in zwei Abschnitte 4 und 5 unterteilt, die unabhängig voneinander und in einem Abstand übereinander angeordnet sind, wie im einzelnen Fig. 2 zeigt. Durch die Reihenschaltung der Windungen im einen Abschnitt 4 mit den Windungen im zweiten Abschnitt 5 wird eine geringere Kapazität zwischen den beiden Abschnitten erreicht als bei Anordnung aller Windungen in einem einzigen Block oder Abschnitt. Eine Anordnung aller windungen in einem Block würde einer Parallelschaltung der Kapazitäten entsprechen, die höher ist als bei Reihenschaltung.

In Fig. 2 ist der untere Abschnitt 4 der Spule mit einer Eingangsklemme 6 versehen. Nach einer gewissen Anzahl von Windungen in diesem Abschnitt 4 führt ein außerhalb der Wicklung liegender Verbindungsabschnitt 7 zum oberen Abschnitt 5 der Spule, der vorzugsweise mit der gleichen Anzahl von Windungen versehen ist wie der untere Abschnitt 4. Bei 8 ist die Ausgangsklemme am oberen Abschnitt 5 der Spule dargestellt. Bei einer Windungszahl von beispielsweise insgesamt 126 Windungen/Spule (Primärspule 2 oder Sekundärspule 3) werden in jedem Abschnitt 4,5 jeweils 63 Windungen vorgesehen.

Zur weiteren Verringerung der Kapazität der Spule kann diese auch in mehr als zwei Abschnitte unterteilt werden, die in derdargestellten Weise in Reihe geschaltet sind.

Eine weitere Möglichkeit der Kapazitätsverringerung besteht darin, den Abstand der einzelnen Windungen zu erhöhen Dies kann durch zusätzliche oder dikkere Isolierungen der elektrischen Leiter der einzelnen Windungen erreicht werden oder durch Abstandhalter, z. B. aus Keramikmaterial, zwischen den Windungen

Vorzugsweise werden auf Primär- und Sekundärseite gleiche Spulen 2 und 3 vorgesehen, so daß sich ein symmetrischer Aufbau ergibt. Auch werden Primär-und Sekundärspulen vorzugsweise in der Nähe der Resonanzfrequenz betrieben Nach einer abgewandelten Ausführungsform können aber auch die Primärspulen in der Nähe der Resonanzfrequenz betrieben werden, während die Sekundärspulen nicht mit Resonanzfrequenz arbeiten.

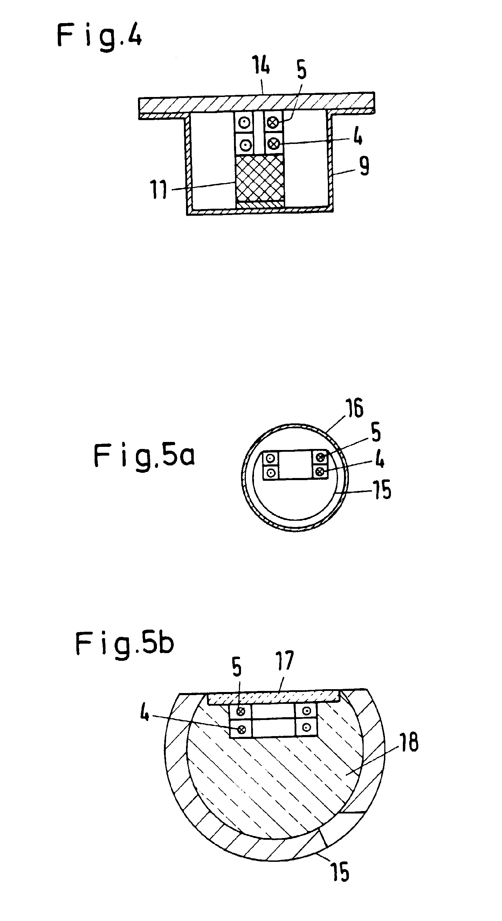

Fig. 3 zeigt in einem Längsschnitt ein im Längs- und Querschnitt etwa U-förmiges Gehäuse 9 aus Metall, in dem eine Spule 2 oder 3 mit den Abschnitten 4 und 5 angeordnet ist. Das Gehäuse 9 ist im wesentlichen mit einer Vergußmasse 10, beispielsweise Epoxydharz, ausgegossen, die auch die Spule umhüllt und damit den Spulenkern bildet. Wie die Querschnittsdarstellung nach Fig. 3 und 4 zeigt, ist die Spule in einem bestimmten Abstand von den Seitenwänden und der Bodenplatte des Gehäuses angeordnet, wobei in Fig. 4 lediglich eine Abstützung 11 für die Spule schematisch angedeutet ist, die die Spule in einem bestimmten Abstand von der Bodenplatte des Gehäuses hält, während der übrige Querschnitt des Gehäuses freigelassen ist, der auch mit einer anderen Vergußmasse gefüllt sein kann. In Fig. 3 ist zur Einsparung an Material der Vergußmasse ein Füllmaterial bei 12 eingesetzt, das beispielsweise aus Holz bestehen kann. Bei 13 ist eine Verkrallung in Form von Bügeln oder dgl. angedeutet, durch die eine feste Verbindung zwischen den Seitenwänden, dem Boden des Gehäuses 9 und der Vergußmasse 10 hergestellt wird, die die darin eingebettete Spule schützt.

Das die Spule im Querschnitt in einem bestimmten Abstand etwa U-förmig umgebende Gehäuse 9 (Fig. 4) aus magnetisch leitendem Material bzw. Metall dient zur Einengung des Meßfeldes. Durch diese Abschirmung aus Metall werden jene Bereiche, in denen keine Meßeffekte auftreten sollen, elektromagnetisch kurzgeschlossen, so daß nahezu keine Störeinflüsse durch sich bewegende Maschinenteile, die sich in der Nähe befinden, auftreten.

In Fig. 4 ist mit 14 eine Verschleißplatte bezeichnet, die die Spule und das Gehäuse abdeckt und aus magnetisch und elektrisch nicht leitendem Material besteht, beispielsweise aus Kunststoff, wie Polyamid. Diese Verschleißplatte 14 dient dazu, die Meßanordnung gegen mechanische Einwirkung eines zu überwachenden Metallbandes zu schützen, das normalerweise in Fig. 4 über der Verschleißplatte 14 in einem Abstand angeordnet ist, aber unter ungünstigen Umständen auf der Meßanordnung gleiten kann.

Das Gehäuse 9, insbesondere dessen Bodenplatte, besteht vorzugsweise aus einem mehrfach versteiften, rostfreien Stahlblech, das als tragendes Grundelement für den Aufbau dient und zugleich als Montageflansch verwendet werden kann.

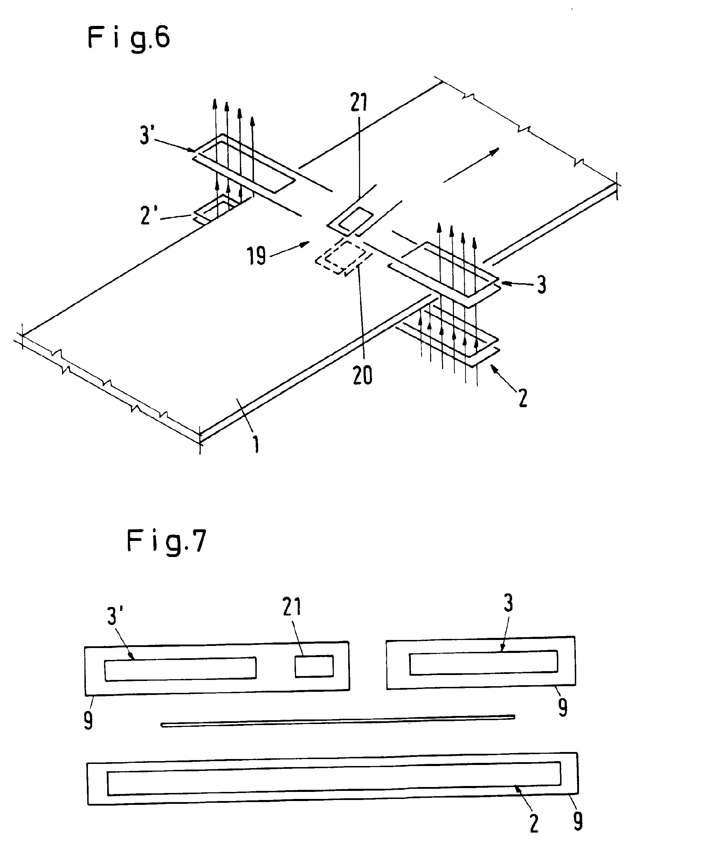

Fig. 5 zeigt Ausführungsbeispiele einer Meßanordnung z.B. für eine Beizanlage in Fig. 5a bzw. für heiße Zonen, beispielsweise für die Bandlagemessung in einem Glühofen in Fig. 5b. Die Spule 2 bzw. 3 mit den Abschnitten 4,5 ist in der Querschnittsansicht nach Fig. 5a von einem Teilquerschnitt eines Metallrohres 15 auf den Seiten und auf der Unterseite umgeben, das als Metallabschirmung der Spule entsprechend dem Metallgehäuse 9 nach Fig. 4 dient. Vorzugsweise wird hierfür ein aufgeschnittenes Rohr verwendet, um einen C-förmigen Querschnitt der Abschirmung bzw. eine nach hinten gerichtete Abschirmung zu erhalten, wobei die Spule in der Nähe der sich ergebenden Längsöffnung angesetzt wird Dieser Aufbau ist von einem Keramikrohr 16 umgeben, das mit einer nicht dargestellten Vergußmasse ausgefüllt sein kann, wobei die Vergußmasse wiederum den Spulenkern bildet. Die C-förmige Metallabschirmung 15 kann in einem Abstand von dem Keramikrohr 16 angeordnet sein. Auch kann ein das Keramikrohr 16 umgebendes Metallgehäuse vorgesehen werden.

Fig. 5b zeigt eine abgewandelte Ausführungsform einer hitzebeständigen Meßanordnung, wobei das C-förmige Metallrohr 15, das als Abschirmung und zugleich als Träger für die Meßanordnung dient, auf der offenen Seite von einer hitzebeständigen Keramikplatte 17 abgedeckt sein kann, unter der die Spule 2 bzw. 3 angeordnet ist. Der verbleibende Querschnitt des Metallrohres 15 kann durch eine hitzebeständige und wärmeisolierende Masse 18 ausgegossen sein, die insbesondere aus Keramik bestehen kann. Hierbei kann das Keramikmaterial den magnetisch nicht leitenden Spulenkern bilden. Die hitzebeständige Keramikplatte 17 kann zugleich als Verschleißplatte dienen.

Bei den Ausführungsformen nach Fig. 5b wird für die Spule ein hoch temperaturfester Draht, beispielsweise eine Chrom-Nickel-Legierung, verwendet, die bis 1200°C hitzefest ist. Der Leitungsdraht wird mit einem Geflecht oder Umspinnung aus Keramikmaterial bzw. einem Keramikvlies oder Keramikschlauch zur weiteren Wärmeisolierung umgeben. Durch eine solche Ausgestaltung kann beispielsweise bei einer Bandtemperatur von etwa 900°C die Bandlage überwacht werden. Eine weitere Möglichkeit besteht darin, entsprechend geformte Spulenkörper z B. aus Keramik zu verwenden.

Zur Abstützung der langgestreckten Windungen der Spule kann im Kernbereich auch ein Drahtgeflecht oder eine Metallbandage vorgesehen werden, auf der die Windungen aufliegen. Durch eine derartige Abstützung, die einen im wesentlichen nicht-magnetischen Kern ergibt, wird das von der Spule erzeugte homogene Feld nicht gestört.

Durch die beschriebene Wicklungsart der kernlosen Spulen und die hohe Betriebsfrequenz erhält man einen starken Meßeffekt, so daß alle Arten von Metallbändern sicher erfaßt werden können. Dies gilt auch für nicht-magnetische Materialien, wie Aluminium, Kupfer, Messing oder auch austenitischen Chrom-Nickel-Stahl mit einer Bandstärke von z B. 0,1 mm. Zudem ergibt sich ein großer Meßbereich bis ca. 1 m und mehr bei der Mittenmessung eines Metallbandes. Unter Metallband sind auch solche Bänder zu verstehen, die leitend sind, jedoch nicht aus Metall bestehen, wie beispielsweise Bänder aus elektrisch leitendem Kunststoff.

Die beschriebene Meßanordnung dient zur Messung der Mittenlage eines Bandes, wobei die Differenz der an den beiden Bandkanten ermittelten Signale gebildet und daraus ein Signal für die Mittenlage abgeleitet wird, das einer nicht dargestellten Regeleinrichtung für den Bandlauf zugeführt werden kann. Die erfindungsgemäße Ausgestaltung ist auch für einen einzelnen Sensor aus Primär- und Sekundärspule für die Überwachung einer einzelnen Bandkante von Vorteil.

Die beschriebene Meßanordnung kann auch zur Schweißnahterkennung an einem Band eingesetzt werden, wobei die Schweißnaht quer zur Bandlängsrichtung verläuft und zwei Bänder beim Durchlauf durch eine Bandbehandlungsanlage miteinander verbindet. Im Bereich dieser Schweißnaht wird z.B. im Bereich der Bandkante ein Ausschnitt oder auch eine Durchbrechung im Band vorgesehen, die zur Überwachung dient. Beim Durchlauf eines solchen Ausschnitts oder einer solchen Durchbrechung durch einen Sensor aus Primär- und Sekundärspule kann durch die dadurch hervorgerufene Kopplungsänderung der Durchlauf der Schweißnaht festgestellt werden. Unter Einbeziehung der Bandgeschwindigkeit kann die Lage der Schweißnaht in der Bandbehandlungsanlage weiterverfolgt werden. Der Durchlauf einer Schweißnaht kann auch mit der in Fig. 1 dargestellten Meßanordnung für die Mittenlage des Bandes festgestellt werden, weil sich durch den Ausschnitt oder die Durchbrechung im Bereich der Schweißnaht eine deutliche Kopplungsänderung ergibt.

Ferner kann mit dieser Meßanordnung auch die Bandbreite erfaßt werden, indem die Summe der an den beiden Bandkanten ermittelten Signale gebildet und daraus ein Signal für die Bandbreitenänderung abgeleitet wird.

Vorteilhafterweise wird die Polarität der Spulen an der einen Bandkante umgekehrt zu der auf der gegenüberliegenden Bandkante geschaltet. Bei dicht nebeneinander liegenden Spulen verringert sich durch die gegenläufige Polarität der Bereich, in dem kein Meßeffekt auftritt. Hierdurch ist es möglich, die Sekundärspulen 3,3' zur Erfassung der Mittenlage von sehr schmalen Bändern unmittelbar nebeneinander anzuordnen, so daß die in Fig. 1 wiedergegebenen Spulen 3,3' in horizontaler Richtung unmittelbar nebeneinander liegen. Durch die unterschiedliche Polarität der Spulen an den gegenüberliegenden Bandkanten erhält man auch bei dieser Anordnung einen eindeutigen Meßeffekt. Werden die Sekundärspulen 3,3' dicht nebeneinander angeordnet, so kann auch nur eine beide Sekundärspulen überdeckende Primärspule 2 vorgesehen werden, wie Fig. 7 zeigt. Es können auch die Sekundärspulen seitlich versetzt angeordnet werden.

Eine weitere Möglichkeit besteht darin, auf einer Seite Primär- und Sekundärspule zu vertauschen, so daß an einer Bandkante die Primärspule unterhalb und an der gegenüberliegenden Bandkante die Primärspule oberhalb des Bandes angeordnet ist.

Um eine Beeinflussung der Sekundärspule auf der einen Bandseite durch die Primärspule auf der anderen Bandseite auszuschalten, können die beiden Primärspulen taktweise so betrieben werden, daß einmal die Spule auf der einen Seite und dann die Spule auf der anderen Seite ein Feld abstrahlt, wobei jeweils nur die zugeordnete Sekundärspule auf Empfang geschaltet wird. Durch die hohe Betriebsfrequenz erhält man auch eine erhöhte Dynamik der Meßanordnung in der Weise, daß das Meßergebnis schneller erhalten wird als bei niedrigerer Betriebsfrequenz.

Die abzutastenden Bänder haben für das elektromagnetische Feld ein unterschiedliches Dämpfungsvermögen, das im wesentlichen von der Materialzusammensetzung, der Banddicke und Bandbreite sowie der Bandtemperatur abhängt. Für den an die Primär- und Sekundärspulen angeschlossenen Regelkreis für die Bandlage ergibt sich bei abnehmender Dämpfung eine geringe Regelsteilheit und dadurch ein größerer Regelfehler. Um Steilheitsunterschiede des Meßeffektes auszuschalten, wird nach einer weiteren Ausführungsform der Erfindung ein Referenzsensor verwendet, durch den das Dämpfungsvermögen des Bandes ständig errechnet werden kann. Durch die Verwendung eines zur Bandmitte hin angeordneten Referenzsensors ist die absolute Höhe des Meßeffektes direkt zu ermitteln. Dies läßt sich durch entsprechende Auswertung zur Selbstkompensation des gesamten Meßsystems heranziehen. Damit wird es möglich, die Steilheitsunterschiede des Meßeffektes bei unterschiedlichen Bandmaterialien und Eigenschaften auszuschalten. Dies ist besonders zweckmäßig für eine Anwendung in heißen Zonen, zur Schweißnahterkennung und zur Lageerfassung von Bandkanten.

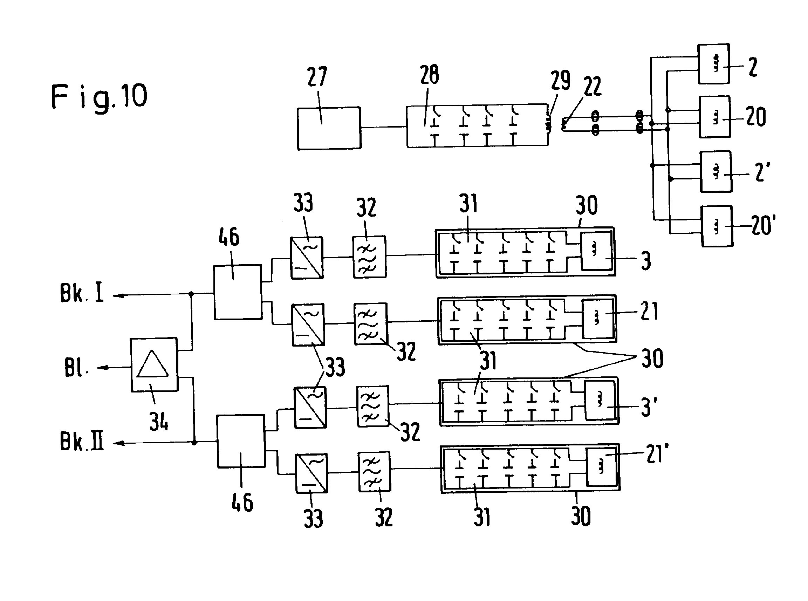

Fig. 6 zeigt in einer schematischen, perspektivischen Ansicht eine Meßanordnung mit einem Referenzsensor 19, der bei dem Ausführungsbeispiel nach Fig. 6 etwa in der Bandmitte angeordnet ist und eine primäre Referenzspule 20 und eine nach Art eines Transformators auf der anderen Bandseite gegenüberliegende sekundäre Referenzspule 21 aufweist. Dieser Referenzsensor 19 stellt die minimal mögliche Kopplung fest, indem die sekundäre Referenzspule 21 nur noch den vom Bandmaterial gedämpften Teil des von der primären Referenzspule 20 abgegebenen Magnetfelds abtastet. Der Referenzsensor wird dazu verwendet, den Einfluß unterschiedlicher Materialeigenschaften des Bandes 1 zu kompensieren und den Meßeffekt zu verbessern, indem das vom Referenzsensor erhaltene Signal mit dem von den beiden Bandkantensensoren erhaltenen Signalen weiterverarbeitet wird. Dies wird anhand des Schaltbildes nach Fig. 10 näher erläutert.

Fig. 7 zeigt eine abgewandelte Ausführungsform der Meßanordnung mit Referenzsensor, wobei unter dem Band 1 eine einzelne Primärspule 2 angeordnet ist, die sich in ihrer Längserstreckung über die Bandbreite hinaus erstreckt, ansonsten aber den zuvor beschriebenen Aufbau aufweist. Im Bereich der Bandkanten liegen der Primärspule 2 die Sekundärspulen 3,3' gegenüber, wobei der Referenzsensor lediglich in Form einer sekundären Referenzspule 21 ausgebildet ist, die beispielsweise im Gehäuse 9 der Sekundärspule 3' angeordnet sein kann.

Es sind auch andere Anordnungen des Referenzsensors möglich. So kann jeweils pro Bandkante ein Referenzsensor 19 vorgesehen werden, so daß der in Fig. 6 wiedergegebene Referenzsensor 19 auf jeder Bandseite angeordnet wird, wie dies in Fig. 10 dargestellt ist. Weiterhin können die primären- und sekundären Referenzspulen 20,21 in Fig. 6 beispielsweise im Gehäuse 9 der Spulen 2 und 3 angeordnet werden. Ebenso ist es möglich, daß die sekundäre Referenzspule 21 beispielsweise durch eine gewisse Schrägstellung im Innenbereich des Bandes 1, das von einer einzelnen, im Bandkantenbereich angeordneten Primärspule 2 abgegebene, gedämpfte Magnetfeld erfassen kann, das sich von der Primärspule über den Bereich der Sekundärspule hinaus ausbreitet, wobei die sekundäre Referenzspule 21 nur den vom Bandmaterial vollständig gedämpften Teil des Magnetfeldes abtastet.

Der Referenzsensor kann von den Abmesssungen her wesentlich kleiner gestaltet sein als die Sekundärspulen 3. Hierdurch läßt sich der Referenzsensor leicht im Gehäuse einer Sekundärspule integrieren. Es kann auch die primäre Referenzspule 20 im Gehäuse einer Primärspule 2 integriert werden.

Der Referenzsensor kann auch dazu verwendet werden, die Abstrahlungsintensität der Primärspule zu steuern bzw. zu regeln. Durch Messung der Sensortemperatur kann bei Anwendung in einem Ofen zusätzlich die Wärmedehnung des mechanischen Aufbaus und damit die Lage der Spulen im Ofen und somit die absolute Lage des Bandes genau bestimmt werden.

Werden die Primärspulen 2,2' abwechselnd taktweise betrieben, so kann zwischen den Takten der Referenzsensor abgefragt werden.

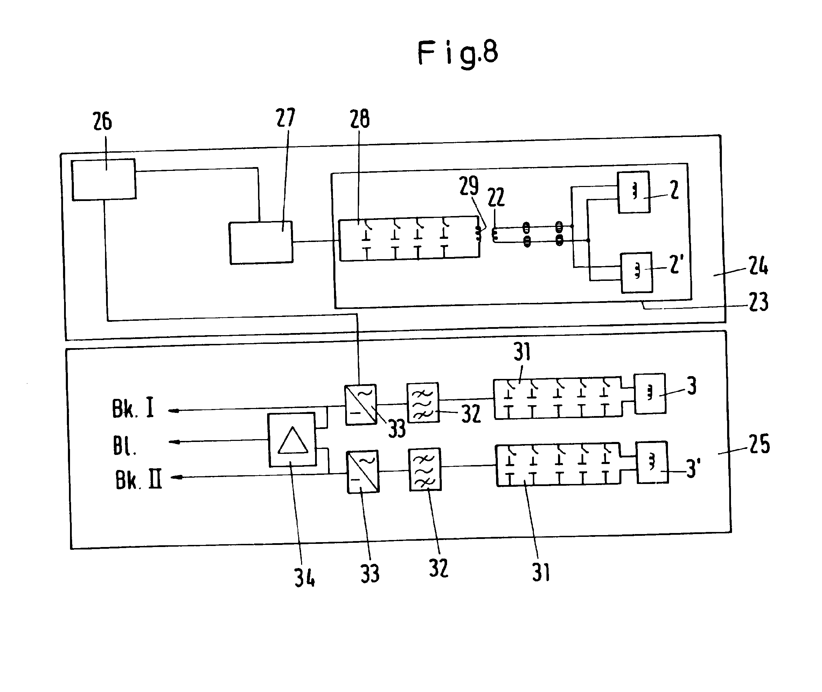

Fig. 8 zeigt schematisch den Aufbau einer Erregerschaltung 24 und einer Detektorschaltung 25 mit den angeschlossenen Primärspulen 2, 2' und Sekundärspulen 3, 3'. Die Erregerschaltung 24 umfaßt ein Netzteil 26, mit dem auch die Detektorschaltung 25 versorgt wird.

Die eigentliche Erregerschaltung weist eine Sollwerteinspeisung 27 mit hoher Betriebsfrequenz von z. B. 40 kHz und einen Schwingkreis 23 auf, umfassend einen Kondensatorblock 28, Resonanzspule 29, Spule 22 und den Primärspulen 2,2'. Durch die Sollwerteinspeisung 27 wird der Schwingkreis 23 in der Nähe seiner Resonanzfrequenz angeregt, indem eine elektrische Schwingung mit einer Amplitude, die dem Sollwert entspricht, eingespeist wird Die Resonanzspule 29 bildet mit einer weiteren Spule 22 einen Übertrager bzw. Transformator, mit dem die hochfrequente Wechselspannung auf die Primärspulen 2, 2' übertragen wird und der Stromkreis der Primärspulen 2, 2' galvanisch vom Rest der Schaltung entkoppelt ist. Die Primärspulen 2, 2' sind jeweils parallel zur Spule 22 geschaltet. Der Schwingkreis 23 kann durch zuschaltbare Kondensatoren 28 auf die Kabellänge zwischen Erregerschaltung und Primärspulen abgestimmt werden und damit die Kabelkapazitäten ausgleichen, wobei der Schwingkreis 23 durch den Kondensatorblock 28 so auf die Gesamtinduktivität des Schwingkreises 23, die sich aus dem Übertrager 29,22 und den Primärspulen 2,2' zusammensetzt, eingestellt wird, daß sich die Resonanzfrequenz des Schwingkreises 23 in der Nähe der Betriebsfrequenz befindet und zwar so daß der Schwingkreis 23 ein induktives Verhalten aufweist, d h. die Spannungsphase eilt der Stromphase voraus. Sowohl die zuschaltbaren Kondensatoren 28, als auch die Erregerschaltung sind parallel zur Resonanzspule 29 geschaltet.

Jeder Primärspule kann auch ein eigener Schwingkreis zugeordnet sein, so daß auch ein abwechselnder Betrieb möglich ist. Ferner ist der Betrieb der Primär-und/oder Sekundärspulen auch über einen Serienschwingkreis möglich.

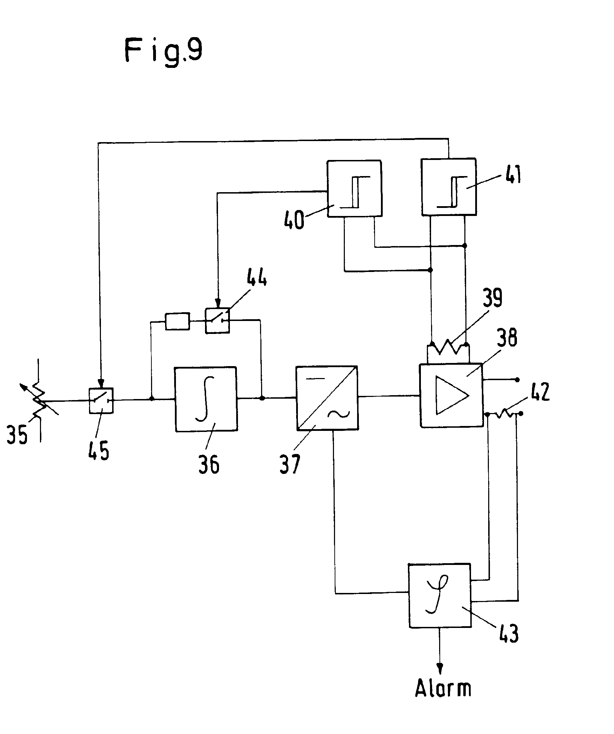

Die Sollwerteinspeisung 27 ist in Fig. 9 als Blockschaltbild dargestellt. Über ein Potentiometer 35 wird eine Spannung abgegriffen, die über einen Schalter 45 an einen Integrator 36 weitergeleitet wird. Der Integrator 36 ist mit einem Schalter 44 versehen, der ihn in bestimmten Fällen abschaltet. An den Integrator 36 schließt sich ein Funktionsgenerator 37 an, der das Gleichspannungsausgangssignal des Integrators 36 in eine sinusförmige Wechselspannung wandelt, die über einen Verstärker 38 in den Schwingkreis 23 eingespeist wird. Der Funktionsgenerator hat eine konstante Betriebsfrequenz und ist aus temperaturkompensierten Bauteilen aufgebaut. Über den Widerstand 39 wird ein Spannungssignal abgegriffen, das dem durch den Verstärker 38, einer Leistungs-Endstufe, in dem Schwingkreis 23 eingespeisten Strom proportional ist. Dieses Spannungssignal wird zwei Schwellwertschaltern 40 und 41 zugeführt, die die Schalter 44 und 45 ansteuern. Die Schwellwertschalter, die z. B. als Schmitt-Trigger ausgebildet sein können, können z. B. so eingestellt werden, daß der Schwellwertschalter 40 den Schalter 44 ab 1,3 Ampere Einspeisestromstärke durchschaltet, und für den Schwellwertschalter 41 ist z. B. eine Stromstärke von 1 Ampere Einspeisestrom als Schwellwert zweckmäßig, um den Schalter 45 auszuschalten.

Durch die Erregerschaltung 24 wird eine sinusförmige Abstrahlung der Primärspulen 2 ausgebildet, die ein geringes Maß an Verzerrungen hat (geringer Oberwellengehalt), um eine geringe aktive Funkentstörung zu erreichen

Bei der Detektorschaltung bilden die Sekundärspulen 3, 3' mit den zuschaltbaren Kondensatoren 31 jeweils einen Resonanzkreis 30.

Durch die zuschaltbaren Kondensatoren 31 wird jeder Resonanzkreis 30 auf die Leitungsslänge zwischen Detektorschaltung 25 und Sekundärspulen 3, 3' abgestimmt. Die empfangenen Signale werden durch Bandpässe 32 gefiltert und durch Gleichrichter 33 verstärkt. An den Ausgängen der Gleichrichter 33 liegt das Signal für die Lage der Bandkante 1 bzw. Bandkante 11. Werden diese beiden Signale für die Bandkante I bzw. für die Bandkante II durch einen Differenzverstärker 34 voneinander subtrahiert, so erhält man ein Signal für die Mittenlage des Bandes bzw. für die Bandlage.

Bei abwechselndem Betrieb erfolgt die Signalermittlung in den Taktzeiten, wobei die Signale in den Taktpausen zur Auswertung zusätzlich herangezogen werden können. Ein nicht dargestellter Schalter für den Taktbetrieb kann in Reihe oder parallel zum Schwingkreis geschaltet werden

Beim Einschalten der Erregerschaltung 24 wird zuerst der Schalter 45 eingeschaltet, wodurch eine bestimmte Spannung an den Integrator 36 gelegt wird. Das Ausgangssignal des Integrators wächst an und steuert so über den Funktionsgenerator 37 und den Verstärker 38 den Einspeisestrom, der zunimmt, bis das Ausgangssignal des Integrators 36 mit der Spannung am Abgriff des Potentiometers 35 übereinstimmt. Wird bei einem Einschalt-Kurzschluß die erste Schwelle des Schwellwertschalters 41 bei z. B. 1 Ampere erreicht, so wird das Basissignal des Integrators 36 über den Schalter 45 ausgeschaltet und das Ausgangssignal des Integrators bleibt konstant auf einem Plateau bzw. Nennwert, der dem Einspeisestrom von etwa z. B. 1 Ampere entspricht.

Im Falle eines Betriebskurzschlusses im Schwingkreis 23, insbesondere in den Zuleitungen der Primärspulen 2, 2', fällt die Last am Verstärker 38 schlagartig ab, und der Einspeisestrom nimmt dementsprechend schnell zu. Bei einer solchen Einspeisestromerhöhung wird der Schalter 44 durch den Schwellwertschalter 40 eingeschaltet, wodurch der Integrator 36 ausgeschaltet wird und das Steuersignal für den Funktionsgenerator 37 auf annähernd 0 zurückgefahren wird. Wenn der Kurzschluß behoben ist, stellt sich die Regelung von selbst wieder auf den richtigen Wert ein.

Durch die Schaltung nach Fig. 9 wird ohne thermische Schmelzsicherung oder dgl., die ein selbstätiges Einschalten nicht zulassen würde, eine Sicherung vor Überlastung beim Einschalten und bei Kurzschluß des Primär-Schwingkreises erreicht.

Ferner wird durch einen Phasendecoder 43 ein Signal, das über den Widerstand 42 im Schwingkreis 23 abgegriffen wird und die Phase des Stroms im Schwingkreis 23 wiedergibt, mit einem Signal des Funktionsgenerators 37 oder einer oder beider Ausgangsleitungen des Verstärkers 38 verglichen, das der Phase der eingespeisten Spannung im Schwingkreis 23 entspricht Bei Störungen in Form von Unterbrechungen in den Zuleitungen der Primärspulen 2,2' verändert sich die Phasenbeziehung im Resonanzkreis von einer Nacheilung zu einer Voreilung der Stromphase gegenüber der Spannungsphase. Bei der Feststellung einer Änderung der Phasenbeziehung wird ein Alarm durch den Phasendecoder 43 ausgegeben. In ähnlicher Weise können die Schwingkreise der Sekundärspulen überwacht werden.

Fig. 10 zeigt einen Schaltungsaufbau mit Referenzsensoren, die zwei primäre Referenzspulen 20 und 20' und zwei sekundäre Referenzspulen 21 und 21' aufweisen. Die Erregerschaltung entspricht im wesentlichen der aus Fig. 8, wobei nun aber zwei Primärspulen 2 und 2' und zwei primäre Referenzspulen 20 und 20' jeweils parallel zur Spule 22 geschaltet sind, wobei die Primärspulen 2 und 2' für das Meßsignal und die primären Referenzspulen 20 und 20' für das Referenzsignal vorgesehen sind. Die entsprechenden zwei Sekundärspulen 3 und 3'und die zwei sekundären Referenzspulen 21 und 21' befinden sich, wie beim Aufbau aus Fig. 8, jeweils in einem eigenen Resonanzkreis 30, wobei sich jeweils ein Bandpaß 32, ein nicht dargestellter Normierverstärker, ein Gleichrichter 33 und ein nicht dargestelltes Glättungselement anschließt. Jeder Sekundärspule ist jeweils eine sekundäre Referenzspule zugeordnet, wobei die jeweils zwei Signale durch eine Auswerteelektronik 46 gemäß folgender Formel ausgewertet werden:
MES_{KORR} = (MES-REF) REFMAx/(REFMAX - REF),

wobei MES_{KORR} der korrigierte Meßwert der Bandkante, MES der nicht korrigierte Meßwert von der Spule 3 bzw. 3' der Bandkante am Ausgang des Gleichrichters 33, REF der Referenzwert, ermittelt durch die Spule 30 bzw. 30' am Ausgang des Gleichrichters 33 und REF_{MAX} der maximale Referenzwert ist, der anliegt, wenn sich kein Band zwischen primärer und sekundärer Referenzspule befindet. Die Bandlage ergibt sich aus der Differenz und die Bandbreite aus der Summe der korrigierten Meßwerte (MES_{KORR}) der beiden Bandkanten. Diese Auswertung entspricht einer Selbstkompensation des gesamten Systems, wodurch Steilheitsunterschiede der Meßwerte (MES) ausgeglichen werden und der elektrische Meßbereich dem Bandmaterial angepaßt und entsprechend dem Wert REF_{MAX} aufgespreitzt wird. Zusätzlich zu dieser elektronischen Auswertung ist eine elektronische Linearisierung der Meßwerte möglich. Es kann auch ein und derselbe Referenzwert zur Auswertung der Meßwerte der beiden Bandkanten verwendet werden.

Eine weitere Möglichkeit, die Spulen auf Funktionsfähigkeit zu überprüfen, besteht darin, sie von einem eingeprägten Gleich- oder Wechselstrom durchfließen zu lassen. Dazu werden die Strom- und Spannungssignale ausgewertet. Die Stromeinprägung kann während des Betriebszustandes oder auch in Taktpausen erfolgen. Ein Defekt wird durch Abweichung der festgestellten von der vorgegebenen Stromeinprägung ermittelt.

Durch das Kontrollieren der Signale MES bzw. REF bzw. MES_{KORR} mit Schwellwertschaltern, die bei Unterschreiten bestimmter Schwellwerte Alarm ausgeben, können auf einfache Art und Weise die Sekundärspulen auf ihre Funktionstüchtigkeit überwacht werden.

Ferner kann mit einem Doppelschwellwertschalter, an dessen Eingang das Signal für die Bandlage liegt, eine Bandschieflage bzw. Bandverlagerung bei entsprechender Schwellwertunter- oder Schwellwertüberschreitung festgestellt werden.

Die Ausgangssignale für die Bandlage werden durch nicht dargestellte Verstärker nachverstärkt, wobei in Abhängigkeit vom Material oder von der Geometrie und den daraus resultierenden unterschiedlichen Meßeffekten ein Verstärker aus wenigstens zwei Verstärkern mit unterschiedlichen Verstärkungsfaktoren ausgewählt werden kann.

## Patentansprüche

1. Vorrichtung zur induktiven Messung der Lage eines Metallbandes (1), wobei auf einer Seite einer Bandkante eine von einer Wechselspannung gespeiste Primärspule (2) und auf der anderen Seite der Bandkante eine Sekundärspule (3) angeordnet ist, mit einer Erregerschaltung (24) zum Einspeisen von Wechselspannung in die Primärspule (2) und einer Detektorschaltung (25) zum Bestimmen der in der Sekundärspule (3) durch den Kopplungseffekt mit der Primärspule induzierten Spannung, dadurch gekennzeichnet,
daß die Primär- und Sekundärspule (2, 3) in Form eines etwa langgestreckten Rechtecks gewickelt und mit ihrer Längsachse quer zur Bandkante angeordnet sind, daß Mittel vorgesehen sind, durch welche die Primärspule (2) mit einer hohen Frequenz der Wechselspannung von wenigstens 10 kHz betrieben wird, und daß die Primärspule (2) und die Sekundärspule (3) einen nicht-magnetischen Spulenkern aufweisen oder kernlos sind.

2. Vorrichtung nach Anspruch 1, dadurch gekennzeichnet, daß die Primär- und/oder Sekundärspule in einem Schwingkreis angeordnet ist, der so ausgebildet ist, daß die Spule im Bereich ihrer Resonanzfrequenzen betrieben wird.

3. Vorrichtung nach Anspruch 1, dadurch gekennzeichnet, daß Mittel vorgesehen sind, durch welche bei Anordnung jeweils einer Primärspule an den gegenüberliegenden Seiten eines Bandes die Primärspulen (2, 2') abwechselnd taktweise betrieben werden.

4. Vorrichtung nach Anspruch 1, dadurch gekennzeichnet, daß ein Referenzsensor (19) zur Erfassung des Kopplungsfaktors durch das Bandmaterial vorgesehen ist, dessen Signal für die Auswertung der Signale von der Sekundärspule (3) verwendbar ist.

5. Vorrichtung nach Anspruch 1,
dadurch gekennzeichnet,
daß die Spule (2,3) in wenigstens zwei Abschnitte (4,5) unterteilt ist, wobei die beiden Spulenabschnitte übereinanderliegend in Reihe geschaltet sind.

6. Vorrichtung nach Anspruch 1,
dadurch gekennzeichnet,
daß die Spule (2,3) auf dem Umfang und auf der vom Band (1) abliegenden Seite von einer Metallabschirmung (9,15) umgeben ist.

7. Vorrichtung nach Anspruch 6,
dadurch gekennzeichnet,
daß die Metallabschirmung (15) einen C-förmigen Querschnitt hat, wobei die Spule in der Öffnung der Abschirmung (15) angeordnet ist.

8. Vorrichtung nach Anspruch 1,
dadurch gekennzeichnet,
daß bei der Anordnung jeweils einer Primär- und Sekundärspule an jeder Bandkante die Polarität der Spulen an der einen Bandkante umgekehrt zu der an der gegenüberliegenden Bandkante geschaltet ist.

9. Vorrichtung nach Anspruch 1,
dadurch gekennzeichnet,
daß bei der Anordnung jeweils einer Primär- und Sekundärspule an jeder Bandkante an der einen Bandkante Primär- und Sekundärspule vertauscht angeordnet sind gegenüber der Anordnung an der gegenüberliegenden Bandkante.

10. Vorrichtung nach Anspruch 1,
dadurch gekennzeichnet,
daß im Bereich der Bandmitte ein Referenzsensor (19) angeordnet ist, der wenigstens eine sekundäre Referenzspule (21) aufweist.

## Claims

1. Apparatus for inductively measuring the position of a metal strip (1), in which a primary coil (2) supplied with an alternating voltage is arranged on one side of an edge of the strip and a secondary coil (3) is arranged on the other side of the strip edge, having an exciter circuit (24) for injecting alternating voltage into the primary coil (2) and a detector circuit (25) for determining the voltage induced in the secondary coil (3) by the coupling effect with the primary coil, characterised in that the primary and secondary coils (2, 3) are wound in the form of a substantially elongated rectangle and are arranged with their longitudinal axes transverse to the strip edge, in that means are provided by which the primary coil (2) is operated with a high frequency of alternating voltage of at least 10 kHz, and in that the primary coil (2) and the secondary coil (3) have a non-magnetic coil core or are coreless.

2. Apparatus according to claim 1, characterised in that the primary and/or secondary coil is/are located in an oscillatory circuit which is so constructed that the coil is operated in the region of its resonant frequencies.

3. Apparatus according to claim 1, characterised in that, with one primary coil arranged on each of the opposing sides of a strip, means are provided by which the primary coils (2, 2') are operated in alternating cycles.

4. Apparatus according to claim 1, characterised in that a reference sensor (19) is provided for detecting the coupling factor due to the strip material, the signal from which may be used for evaluating the signals from the secondary coil (3).

5. Apparatus according to claim 1, characterised in that the coil (2, 3) is subdivided into at least two sections (4, 5), the two coil sections being connected in series one above the other.

6. Apparatus according to claim 1, characterised in that the coil (2, 3) is surrounded by metal screening (9, 15) around its periphery and on the side remote from the strip (1 ).

7. Apparatus according to claim 6, characterised in that the metal screening (15) is C-shaped in cross section, the coil being arranged in the opening in the screening (15).

8. Apparatus according to claim 1, characterised in that, with one primary and secondary coil arranged on each edge of the strip, the polarity of the coils on one edge of the strip is the reverse of that on the opposite edge of the strip.

9. Apparatus according to claim 1, characterised in that, with one primary and secondary coil arranged on each edge of the strip, the arrangement of the primary and secondary coils on one edge of the strip is reversed, compared with the arrangement on the opposite edge of the strip.

10. Apparatus according to claim 1, characterised in that a reference sensor (19), which has at least one secondary reference coil (21 is arranged in the region of the centre of the strip.

## Revendications

1. Dispositif pour la mesure inductive de la position d'une bande métallique (1 une bobine primaire (2) alimentée par une tension alternative étant disposée sur un côté d'une rive de bande et une bobine secondaire étant agencée sur l'autre côté de la rive de bande, avec un circuit d'excitation (24) destiné à l'alimentation de la tension alternative dans la bobine primaire (2) et un circuit de détecteur (25) destiné à déterminer la tension induite dans la bobine secondaire (3) par l'effet de couplage avec la bobine primaire,
caractérisé en ce que,
la bobine primaire et la bobine secondaire (2,3) sont enroulées sous forme d'un rectangle sensiblement allongé et sont disposées avec leur axe longitudinal transversalement à la rive de bande, en ce qu'il est prévu des moyens pour actionner la bobine primaire (2) à une fréquence élevée de la tension alternative d'au moins 10 KHz, et en ce que la bobine primaire (2) et la bobine secondaire (3) présentent un noyau de bobine non-magnétique ou sans noyau.

2. Dispositif selon la revendication 1, caractérisé en ce que la bobine primaire et/ou la bobine secondaire sont agencées dans un circuit résonnant qui est conçu de façon à entraîner la bobine dans le domaine de ses fréquences de résonnance.

3. Dispositif selon la revendication 1, caractérisé en ce que des moyens sont prévu gâce auxquels avec l'implantation respective d'une bobine primaire sur les côtés opposés d'une bande, les bobines primaires (2,2') sont actionnées alternativement par inter- mittance.

4. Dispositif selon la revendication 1, caractérisé en ce qu'il est prévu un capteur de références (19) destiné à la saisie du facteur de couplage par le matériau de la bande dont le signal est utilisable pour l'évaluation des signaux de la bobine secondaire (3).

5. Dispositif selon la revendication 1, caractérisé en ce que la bobine (2,3) est divisée en au moins deux sections (4,5), les deux sections de bobines étant montées en série se superposant.

6. Dispositif selon la revendication 1, caractérisé en ce que la bobine (2,3) est entourée sur la périphérie et sur le côté détourné de la bande (1 ) par un écran métallique (9,15).

7. Dispositif selon la revendication 6, caractérisé en ce que l'écran métallique (15) présente une section transversale en forme de C, la bobine étant disposée dans l'ouverture de l'écran (15).

8. Dispositif selon la revendication 1, caractérisé en ce que pour l'implantation respective d'une bobine primaire et secondaire sur chaque rive de bande, on inverse la polarité des bobines sur une rive de bande par rapport à la rive de bande opposée.

9. Dispositif selon la revendication 1, caraatérisé en ce que pour l'implantation respective d'une bobine primaire et secondaire sur chaque rive de bande, on agence de façon permutée sur une rive de bande la bobine primaire et la bobine secondaire par rapport à l'agencement de la rive de bande opposée.

10. Dispositif selon la revendication 1, caractérisé en ce qu'un capteur de référence 19 est agencé au niveau du milieu de bandes, capteur de référence 19 qui comporte au moins une bobine de référence secondaire (21).
